(19) Europäisches Patentamt
European Patent Office
Office européen des brevets

(11) Veröffentlichungsnummer : **0 242 388 B1**

(12) **EUROPÄISCHE PATENTSCHRIFT**

(45) Veröffentlichungstag der Patentschrift :
**10.04.91 Patentblatt 91/15**

(51) Int. Cl.$^5$ : **G06F 15/68**, H04N 5/232

(21) Anmeldenummer : **86906274.5**

(22) Anmeldetag : **25.10.86**

(86) Internationale Anmeldenummer :
**PCT/DE86/00431**

(87) Internationale Veröffentlichungsnummer :
**WO 87/02801 07.05.87 Gazette 87/10**

# (54) SCHALTUNG ZUR FOKUSSIERUNG EINES OPTISCHEN ABBILDUNGSSYSTEMS.

(30) Priorität : **29.10.85 DE 3538406**

(43) Veröffentlichungstag der Anmeldung :
**28.10.87 Patentblatt 87/44**

(45) Bekanntmachung des Hinweises auf die Patenterteilung :
**10.04.91 Patentblatt 91/15**

(84) Benannte Vertragsstaaten :
**CH FR GB IT LI NL**

(56) Entgegenhaltungen :
**DE-A- 2 408 746**
**DE-B- 2 828 831**
**US-A- 4 494 838**

(73) Patentinhaber : **Illgen, Edgar Dipl.-Phys.**
**Moislinger Allee 108**
**W-2400 Lübeck (DE)**
Patentinhaber : **Lüllmann, Johannes Dipl.-Phys.**
**Waller Strasse 24**
**W-2800 Bremen (DE)**
Patentinhaber : **Harms, Harry Dr.**
**Johanniter Weg 30**
**W-8700 Würzburg (DE)**
Patentinhaber : **Will, Erich**
**Sonnenweg 1**
**W-6330 Wetzlar (DE)**
Patentinhaber : **Kreitlow, Horst Dr.**
**Hollige 42**
**WE-3030 Walsrode (DE)**

(72) Erfinder : **WILL, Erich**
**Sonnenweg 1**
**W-6330 Wetzlar 21 (DE)**
Erfinder : **HARMS, Harry**
**Johanniter Weg 30**
**W-8700 Würzburg 30 (DE)**
Erfinder : **LÜLLMANN, Johannes**
**Waller Strasse 24**
**W-2800 Bremen 1 (DE)**
Erfinder : **ILLGEN, Edgar**
**Moislinger Allee 108**
**W-2400 Lübeck (DE)**
Erfinder : **BOSECK, Siegfried**
**Heideweg 40**
**W-2804 Lilienthal-Klostermoor (DE)**

(74) Vertreter : **Hoormann, Walter, Dr.-Ing. et al**
**FORRESTER & BOEHMERT**
**Widenmayerstrasse 4/I**
**W-8000 München 22 (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Shaltung zur Fokussierung eines optischen Abbildungssytems nach dem Oberbegriff des Anspruchs 1, wie sie aus der DE-B-2 828 831 vorbekannt ist.

Bei dem Vorschlag nach der genannten Druckschrift ist der Rechenaufwand erhe blich, die Verarbeitungsgeschwindigkeit für viele Anwendungsfälle unzureichend.

Der Erfindung liegt die Aufgabe zugrunde, die vorbekannte Schaltung derart weiterzubilden, daß der Fokussiervorgang beschleunigt wird.

Diese Aufgabe wird erfindungsgemäß durch die im kennzeichnenden Teil des Anspruchs 1 angegebenen Merkmale gelöst. Die Unteransprüche geben vorteilhafte Ausgestaltungen der Erfindung an.

Die hier vorgeschlagene Schaltung bildet über sämtliche Bildpunkte eines Bildes die Summe

$$S = \sum_{y=1}^{N} \sum_{x=2}^{M-1} k_{x,y} * H_{x,y}$$

$$\text{mit } H_{x,y} = 2\, I_{x,y} - I_{x-1,y} - I_{x+1,y} \text{ und}$$

$$k_{x,y} = \begin{cases} 0, & \text{wenn } H_{x,y} \leq 0 \\ 1, & \text{wenn } H_{x,y} > 0. \end{cases}$$

Hierin bedeuten

- $k_{x,y}$ den Bewertungsfaktor,
- $y$ die Spaltennummer für die Pixel in der Abbildungsebene,
- $x$ die Zeilennummer,
- $I_{x,y}$ den Helligkeitswert im Bildpunkt x, y,
- $N$ die Anzahl der ausgewerteten, Spalten,
- $M$ die Anzahl der ausgewerteten Bildpunkte einer Zeile.

Diese Summenbildung stellt eine statistische Auswahl aus den möglichen Helligkeitsdifferenzen dar. Es wurde gefunden, daß diese Auswahl zu denselben Ergebnissen führt, jedoch in wesentlich kürzerer Zeit, weil sämtliche negativen Helligkeitsdifferenzen bei der Ermittlung des Maximums der Helligkeitsdifferenz unterdrückt werden.

Ein Ausführungsbeispiel der Erfindung wird in der Zeichnung dargestellt.

Gemäß der Figur werden die digitalisierten Bilddaten dreier Nachbarpunkte einer Zeile entweder gleichzeitig oder nacheinander in Schieberegister (1, 2, 3) eingelesen, und swar der Wert $I_{x+1,y}$ in das Register (1), der Wert $I_{x,y}$ in das Register (2) und der Wert $I_{x-1,y}$ in das Register (3). Sämtliche vor $I_{x-1,y}$ eingelesenen Werte sind für die nachfolgende Rechnung unerheblich und gehen beim Einlesen des nächsten Wertes verloren. Den Registern (1 und 3) ist ein erster Addierer (4) nachgeschaltet, welcher die Intensitäten der äußeren Bildpunkte $I_{x-1,y}$ und $I_{x+1,y}$ addiert. Der Intensitäts- wert des mittleren Bildpunktes $I_{x,y}$ wird in ein erstes Schaltglied (5) eingegeben und erhält hier ein negatives Vorzeichen. Dieser Wert wird in einer Einheit (6) um eine Bitposition nach links geschoben, was einer Multiplikation mit 2 entspricht, und das freigewordene Bit wird auf 1 gesetzt. Das Ergebnis dieser Operation entspricht dem Wert $-2.\, I_{x,y}$ in der Summenformel. Ein nachgeschalteter zweiter Addierer (7) berechnet aus den aus dem ersten Addierer (4) und der Einheit (6) kommenden Werten die Summe $-2.\, I_{x,y} + I_{x-1,y} + I_{x+1,y} - 1$. Durch Setzen eines Carry-Einganges wird die fehlente 1 in der Summe hinzuaddiert. Eine dem zweiten Addierer (7) nachgeschaltete Addiereinheit (9) gibt die Werte in einem Summenspeicher (10) dann ein, wenn die im zweiten Addierer (7) gebildete Summe positiv ist.

Hierzu wird die Aufnahmefähigkeit des Summenpeichers (10) geeignet gesteuert. Der Carry-Ausgang des zweiten Addierers (7) gibt dann ein Signal, wen das Ergebnis der Addition im Addierer (7) negativ ist. In diesem Fall ist das Ergebnis in der Addiereinheit (9) nicht in den Summenspeicher (10) zu übernehmen. Infolgedessen ist der Carry-Ausgang, der als Übernahmeeingang des Summenspeichers (10) gibt, zu negieren. Um dies zu erreichen, ist dem Carry-Ausgang ein Negationsglied (30) nachgeschaltet, das unmittelbar auf den Summenspeicher (10) wirkt. Ist das Ergebnis im zweiten Addierer (7) positiv, dann wird das Ergebnis der Addiereinheit (9) in den Summenspeicher (10) übernommen. Da der Carry- Ausgang vom zweiten Addierer (7) in diesem Fall nicht gesetzt ist, gibt das Negationsglied (30) in diesem Fall ein Übernahmesignal an den Summenspeicher (10).

Das zu erfassende Bild kann beispielsweise mit Hilfe einer Videokamera abgetastet werden. Der Abtaststrahl dieser Kamera liefert nicht nur die jeweils erfaßten Intensitätswerte der einzelnen Bildpunkte an die Schieberegister (1, 2, 3), sondern steuert gleichzeitig einen Taktgeber in einer Steuerlogik (14). Die Steuerlogik wirkt auf die Schieberegister (1, 2, 3), so daß bei jedem neuen Takt, d. h. bei Wechsel des Abtaststrahles zum nächsten Bildpunkt, die Schieberegister für die neuen Werte aufnahmebereit sind.

Die Steuerlogik überprüft gleichzeitig, ob die in den Schieberegistern (1 bis 3) eingegebenen Daten brauchbar sind, denn insbesondere am Bildrand kann es vorkommen, daß der Wert $I_{x-1,\,y}$ oder der Wert $I_{x+1,\,y}$ kein Bildpunkt mehr ist. Nur dann, wenn diese Werte echte Bildpunktwerte sind, werden die Ergebnisse der Addiereinheit (9) in den Summenspeicher (10) übernommen. Tritt hierbei ein Überlauf auf, wird der Übertragzähler (11) inkrementiert, d. h. um eine Einheit erhöht. Der Summenspeicher (10), der Übertragzähler (11) sowie ein Maximalwertspeicher (12) können dann durch ein Mikroprozessor- system ausgelesen und gelöscht werden. Die Selektion des adressierten Speichers geschieht durch eine Registerselektionslogik (13). Der Maximalwertspeicher (12) ist dem Register (1) nachgeschaltet, um Übersteuerungen festzustellen.

Geht man davon aus, daß ein und dasselbe Bild wierderholt bei unterschiedlichen Scharfeinstellungen abgetastet wird, dann speichern der Summenspeicher (10) und der Übertragzähler (11) jedesmal den Wert für eine Bildeinstellung.

Beide können durch eine Registerselektionslogik (13) von einem Mikroprozessor (19) ausgelesen und gelöscht werden. Der Mikroprozessor (19) vergleicht bei jeder neuen Bildeinstellung, ob es sich bei den Werten im Summenspeicher (10) und in dem Übertragzähler (11) um einen Maximalwert handelt. Der Mikroprozessor gibt dann ein Signal, beispielsweise an eine Steuereinrichtung, die die Scharfeinstellung des Bildes ändert. Dieser Vorgang wiederholt sich so lange, bis sich bei der Bildabtastung eindeutig ein Maximalwert der Summe ergibt. Die dazugehörende Bildeinstellung ist dann die gesuchte Scharfeinstellung.

## Ansprüche

1. Schaltungzur Fokussierung eines optischen Abbildungssystems mit drei Schieberegistern (1, 2, 3), welche von einem Bildsendor die Intensitätswerte von jeweils drei benachbarten Bildpunkten erhalten, wobei dem dem mittleren Bildpunkt zugeordneten Schieberegister (2) ein den erfaßten Wert addierendes und verdoppelndes erstes Schaltglied (5) nachgeschaltet, und den beiden anderen Schieberegistern (1, 3) ein erster Addierer (4) nachgeschaltet ist, der deren Werte addiert, mit einem dem ersten Addierer (4) und dem ersten Schaltglied (5) nachgeschalteten zweiten Addierer (7), der den verdoppelten und negierten Wert aus dem dem mittleren Bildpunkt zugeordneten Schieberegister (2) und den Wert aus dem ersten Addierer (4) addiert, mit einem Summenspeicher (10), welcher die von dem zweiten Addierer (7) gebildeten Werte summiert und speichert, und mit einem dritten Addierer (9) zwischen dem zweiten Addierer (7) und dem Summenspeicher (10), dadurch gekennzeichnet, daß zur Steuerung der Aufnahmebereitschaft ein mit dem Carry-Ausgang des zweiten Addierers (7) verbundenes, auf den Summenspeicher (10) wirkendes Negationsglied (30) vorgesehen ist, welches den Summenspeicher (10) nur aufnahmebereit macht, wenn der zweite Addierer (7) einen positiven Wert abgibt.

2. Schaltung nach Anspruch 1, gekennzeichnet durch einen Taktgeber, der den Bildsensor zur punktweisen Abtastung eines Bildes aussteuert und den Schieberegistern (1, 2, 3) die Intensitätswerte der jeweils abgetasteten Bildpunkte übergibt.

3. Schaltung nach Anspruch 1 oder 2, dadurch gekennzeichnet, daß den Schieberegistern (1, 2, 3) und/oder dem Summenspeicher (10) eine Steuerlogik (14) vorgelagert ist, die dann die Aufnahme oder die Weitergabe oder die Summenbildung der Werte verhindert, wenn wenigstens einer der drei Werte kein Bildpunktwert ist.

4. Schaltung nach einem der vorstehenden Ansprüche, dadurch gekennzeichnet, daß dem Summenspeicher (10) ein Übertragzähler (11) zugeordnet ist.

5. Schaltung nach einem der vorstehenden Ansprüche, dadurch gekennzeichnet, daß dem Schieberegister (1), das die Intensitätswerte der jeweiligen Bildpunkte zuerst empfängt, ein Maximalwertspeicher (12) nachgeschaltet ist.

## Claims

1. A circuit for focusing an optical imaging system comprising three shift registers (1, 2, 3) which receive from an image sensor the intensity values of three neighbouring image points at a time, the shift register (2) associated with the middle image point being followed by a first switching element (5) which adds and doubles the captured value, and the other two shift registers (1, 3) are followed by a first adder (4) which adds the values thereof, comprising a second adder (7) following the first adder (4) and the first switching element (5) to add the doubled and negated value from the shift register (2) associated with the middle image point and the value from the first adder (4), comprising an accumulator (10), which accumulates and stores the values formed by the second adder (7), and comprising a third adder (9) between the second adder (7) and the accumulator (10), characterised in that a negation element (30) connected to the carry output of the second adder (7) and acting on the accumulator (10) is provided for controlling the reception readiness, such negation element rendering the accumulator (10) ready for reception only when the second adder (7) delivers a positive value.

2. A circuit according to claim 1, characterised by a clock which triggers the image sensor for the pointwise scanning of an image and transfers to the shift registers (1, 2, 3) the intensity values of the image points scanned at any time.

3. A circuit according to claim 1 or 2, characterised in that the shift registers (1, 2, 3) and/or the accumulator (10) are preceded by a control logic (14) which prevents the reception or transmission or the accumulation of the values if at least one of the three values is not an image point value.

4. A circuit according to any one of the preceding claims, characterised in that a carry-over counter (11) is associated with the accumulator (10).

5. A circuit according to any one of the preceding claims, characterised in that the shift register (1) receiving the intensity values of the relevant image points is followed by a maximum value store (12).

## Revendications

1. Circuit de focalisation d'un système de représentation optique comportant trois registres à décalage (1, 2, 3), qui reçoivent d'un capteur d'image les valeurs d'intensité de chacun de trois points d'image voisins, un premier organe de commutation (5) effectuent l'addition et le doublement de la valeur mesurée étant branché en aval du registre à décalage (2) associé au point d'image central, et un premier additionneur (4) étant branché en aval des deux autres registres à décalage (1, 3), pour ajouter leurs valeurs, avec un deuxième additionneur (7), branché en aval du premier additionneur (4) et du premier organe de commutation (5), qui effectue l'addition de la valeur doublée et de signé inversé provenant du registre à décalage (2) associé au point image central et la valeur provenant du premier additionneur (4), avec une mémoire des totaux (10), qui effectue la sommation et la mise en mémoire des valeurs formées par le deuxième additionneur (7) et avec un troisième additionneur (9), entre le deuxième additionneur (7) et la mémoire des totaux (10), caractérisé en ce que pour commander la disponibilité d'assimilation est prévu un organe d'inversion (30) agissant sur la mémoire des totaux (10), relié à la sortie report du deuxième additionneur (7), et qui ne permet l'assimilation à la mémoire des totaux (10) que lorsque le deuxième additionneur (7) délivre une valeur positive.

2. Circuit selon la revendication 1, caractérisé par un cadenceur qui commande le capteur d'image pour effectuer une exploration point par point d'une image et transmet aux registres à décalage (1, 2, 3) les valeurs d'intensité de chacun des points explorés.

3. Circuit selon la revendication 1 ou 2, caractérisé en ce qu'une logique de commande (14) est placée en amont des registres à décalage (1, 2, 3) et/ou de la mémoire des totaux (10) et empêche alors la réception, ou la restitution ou la formation de la somme des valeurs, lorsqu'au moins l'une des trois valeurs n'est pas une valeur de point image.

4. Circuit selon l'une des revendications précédentes, caractérisé en ce qu'un compteur de report (11) est associé à la mémoire des totaux (10).

5. Circuit selon l'une des revendications précédentes, caractérisé en ce qu'une mémoire de valeur maximale (12) est branchée en aval du registre à décalage (1) qui reçoit d'abord les valeurs d'intensité des points d'image respectifs.

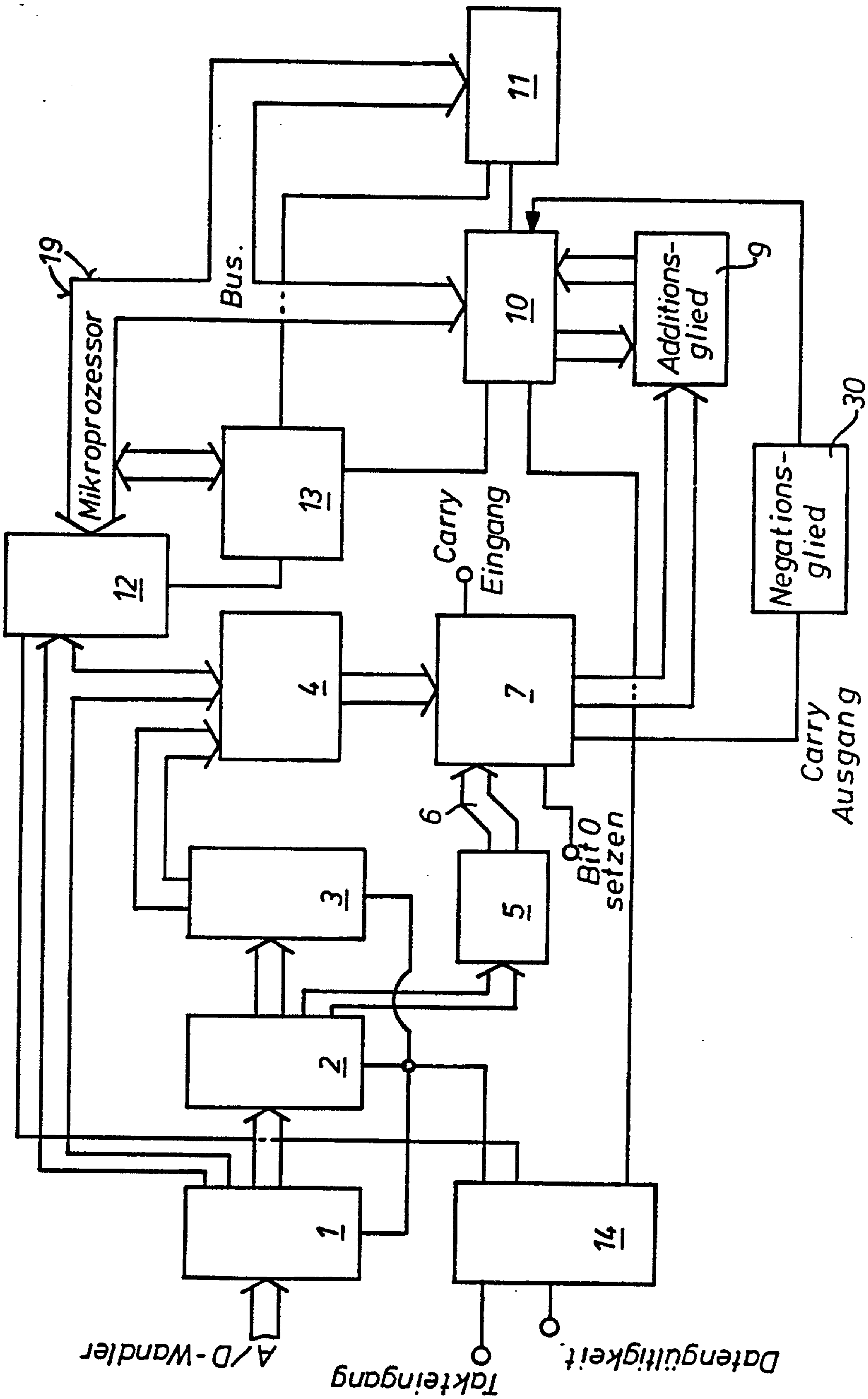
11
10
Additions-
glied
9
Bus.
19
Mikroprozessor
13
12
Carry
Eingang
4
7
Negations-
glied
30
Carry
Ausgang
3
5
6
Bit 0
setzen
2
1
14
A/D-Wandler
Takteingang
Datengültigkeit